# FASCICULE DE BREVET EUROPEEN

(11) **EP 1 514 769 B1**
(45) Date de publication et mention de la délivrance du brevet: **01.08.2012**
(21) Numéro de dépôt: 04292158.5
(22) Date de dépôt: 08.09.2004
(51) Int. Cl.: B62D 25/20, B62D 21/15

(54) **Bas de caisse pour véhicule automobile**
Schweller eines Kraftfahrzeugs
Side sill for a motor vehicle

(30) Priorité: 11.09.2003 FR 0310698
(43) Date de publication de la demande: 16.03.2005
(73) Titulaire: COMPAGNIE PLASTIC OMNIUM, 69007 Lyon (FR)
(72) Inventeur: Montanvert, Pierre, 69100 Villeurbanne (FR); Roussel, Thierry, 52500 Fayl La Forêt (FR); Fayt, Arnold, 01640 Jujurieux (FR)
(74) Mandataire: Remy, Vincent Noel Paul

(56) Documents cités:
- EP-A- 1 331 160
- WO-A-01/02214
- CA-A- 2 388 717
- US-B1- 6 412 799
- PATENT ABSTRACTS OF JAPAN vol. 018, no. 136 (M-1572), 7 mars 1994 (1994-03-07) -& JP 05 319301 A (SUZUKI MOTOR CORP), 3 décembre 1993 (1993-12-03)
- PATENT ABSTRACTS OF JAPAN vol. 2000, no. 13, 5 février 2001 (2001-02-05) -& JP 2000 289654 A (DAIHATSU MOTOR CO LTD), 17 octobre 2000 (2000-10-17)

## Description

La présente invention concerne un bas de caisse pour véhicule automobile.

Plus précisément, l'invention concerne un bas de caisse pour véhicule automobile comportant des moyens de renfort agencés à l'intérieur de ce bas de caisse.

Le document EP 1 331 160 A divulgue une caisse en blanc de véhicule automobile, la caisse comprenant des éléments structurels tels que des bas de caisse et des montants, chaque élément comprenant des moyens de renforts situés à l'intérieur de cet élément.

Le document JP 05 319 301 A divulgue un bas de caisse agencé sur des panneaux de carrosserie, au voisinage d'une portière de véhicule. Il comprend des moyens de renfort constitués de saillies et de dépressions alternées.

On connaît déjà, dans l'état de la technique, des bas de caisse destinés principalement à absorber des chocs mineurs tels que la prise d'un trottoir au cours d'une manoeuvre ou un choc latéral avec un pare-chocs d'un autre véhicule à faible vitesse.

On sait que la plage supérieure d'un tel bas de caisse peut être sollicitée pour supporter le poids d'un passager, par exemple lorsque ce passager y prend appui pour fixer un élément sur le toit de la voiture, ou encore lorsque le véhicule est haut sur roue et qu'il est nécessaire de prendre appui sur la bas de caisse pour monter à bord.

Il est d'usage, pour éviter l'affaissement de ce bas de caisse, de le renforcer grâce à des équerres métalliques internes renforçant la fixation du bas de caisse à la caisse du véhicule. Ces équerres sont généralement fixées à la caisse et à la plage supérieure du bas de caisse.

Le problème d'un tel bas de caisse consiste en ce que, en cas de choc violent, l'emboutissement du bas de caisse entraîne la déformation de ces équerres, qui vont se plaquer contre la portière du véhicule, empêchant son ouverture. Cette condamnation des portières peut s'avérer particulièrement dangereuse, notamment en cas d'incendie du véhicule.

L'invention vise à remédier à cet inconvénient en fournissant un bas de caisse qui ne risque pas de bloquer une portière en cas d'emboutissement.

A cet effet, l'invention a pour objet un bas de caisse pour véhicule automobile comportant des moyens de renfort agencés à l'intérieur de ce bas de caisse, caractérisé en ce que les moyens de renfort comportent une bande en matière plastique ondulée verticale.

Ainsi, dans le cas d'un choc latéral relativement faible et de l'emboutissement du bas de caisse, la bande en matière plastique ondulée se déforme en absorbant le choc, de façon élastique, sans aller se plaquer contre la portière. Dans le cas d'un choc plus violent, la matière plastique se casse (à la différence du métal qui se déforme plastiquement), cette rupture évite également qu'elle se plaque contre la portière.

De façon optionnelle, les moyens de renfort d'un tel bas de caisse comportent au moins une plaque de maintien.

Un avantage de cette plaque de maintien est de soutenir la plage supérieure du bas de caisse sans avoir à utiliser d'équerre métallique, évitant ainsi le blocage éventuel d'une portière. Un autre avantage de cette plaque de maintien est qu'elle est en matière plastique ce qui facilite le recyclage en fin de vie du véhicule.

Un bas de caisse pour véhicule automobile selon l'invention peut en outre comporter l'une ou plusieurs des caractéristiques suivantes :
- la bande ondulée en matière plastique est venue de matière avec la plaque de maintien ;
- le bas de caisse comporte des moyens de fixation des moyens de renfort à la caisse ;
- le bas de caisse comporte des moyens de fixation des moyens de renfort au bas de caisse ;
- les moyens de fixation des moyens de renfort à la caisse sont agencés sur les creux de la partie ondulée ; et
- les moyens de renfort comprennent des moyens de vissage, des moyens de clippage, des moyens de soudage ou des moyens de collage.

L'invention sera mieux comprise à la lecture de la description qui va suivre, donnée uniquement à titre d'exemple et faite en se référant aux dessins annexés dans lesquels :
- la figure 1 représente un véhicule automobile comportant un bas de caisse selon l'invention ;
- la figure 2 est une vue en perspective en partie écorchée d'un bas de caisse selon un premier mode de réalisation de l'invention ;
- la figure 3 est une vue en perspective en partie écorchée d'un bas de caisse selon un second mode de réalisation de l'invention.

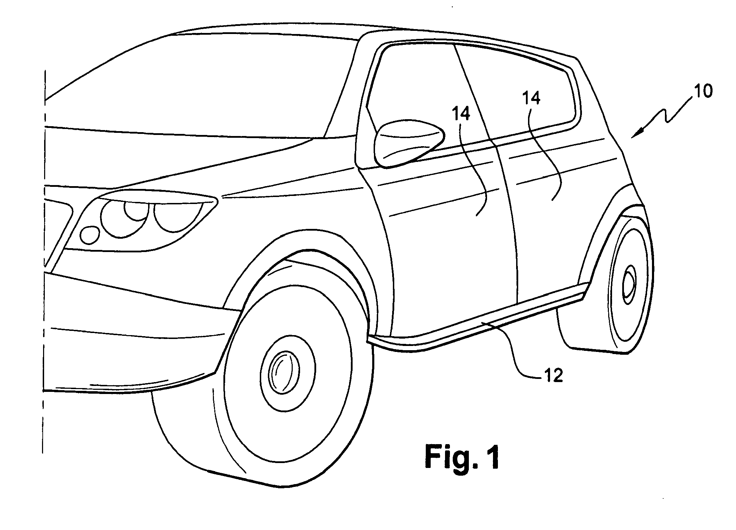

On peut voir sur la figure 1 un véhicule automobile 10 comportant un bas de caisse 12 et des portières latérales 14.

Le bas de caisse 12 est en matière plastique et est destiné à absorber des chocs mineurs, sans déformation plastique de la matière.

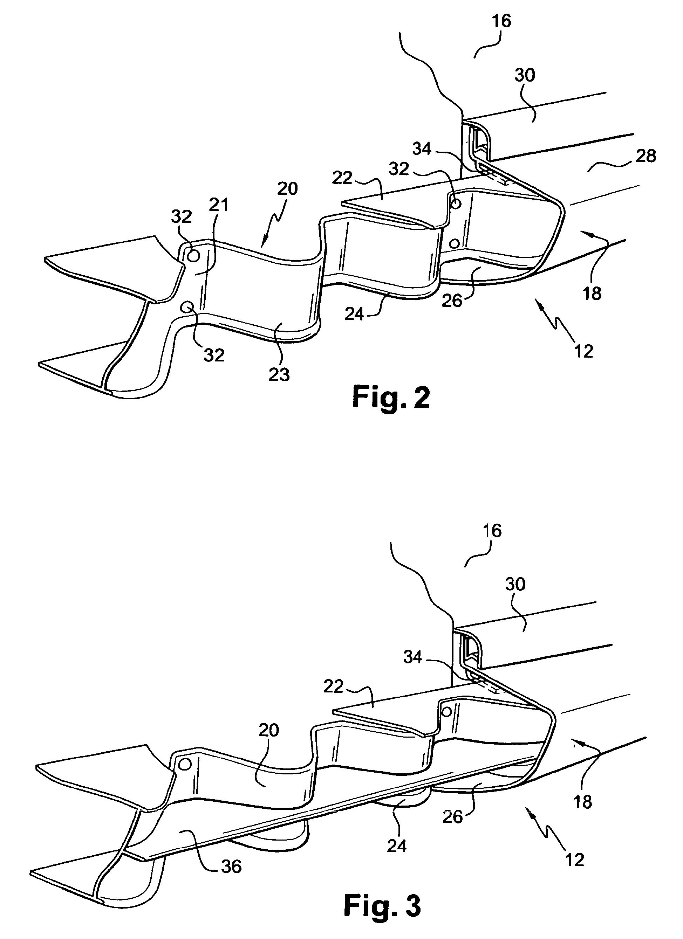

On peut voir sur la figure 2 que le bas de caisse 12 est fixé à la caisse 16 du véhicule 10. Ce bas de caisse 12 comporte une enveloppe 18 à l'intérieur de laquelle sont agencés des moyens de renfort. Ces moyens de renfort comportent une bande ondulée verticale 20, une plaque de maintien supérieure 22 et une plaque de maintien inférieure 24.

La bande ondulée 20 comporte des ondulations orientées de façon à ce qu'en vue de dessus, cette bande ondulée 20 donne sensiblement une sinusoïde. Ces ondulations créent des creux 21, destinés à être plaqués contre la caisse 16 du véhicule, et des bosses 23, dirigées vers l'extérieur du véhicule.

La bande ondulée 20 est en matière plastique, comportant par exemple du tissu de verre, tel que celui commercialisé sous la marque Twintex. Les plaques de maintien 22 et 24 sont également en matière plastique, par exemple en polypropylène, chargé éventuellement de talc.

La bande ondulée 20 est maintenue en position par les plaques de maintien 22 et 24 grâce à des moyens de fixation classiques tels que le collage, le soudage, le clippage, l'adhésivage, etc.

L'enveloppe 18 du bas de caisse 12 comporte une partie inférieure 26, une plage supérieure 28 et, sur cette plage supérieure 28, un rebord 30 destiné à assurer la continuité entre l'enveloppe 18 et la caisse 16 du véhicule 10. La partie inférieure 26 et le rebord 30 de l'enveloppe 18 sont fixés à la caisse 16 du véhicule de façon classique et non représentée sur la figure.

A ces moyens de fixation de l'enveloppe 18 du bas de caisse 12 sur la caisse 16, sont ajoutés des moyens de fixation 32 de la bande ondulée 20 sur la caisse 16, ainsi que des moyens de fixation 34 de la plaque de maintien 22 sur l'enveloppe 18 du bas de caisse 12.

Les moyens de fixation 32 sont situés au niveau des creux 21 de la bande ondulée 20. Ils consistent en des orifices dans lesquels des vis ou des clips sont destinés à passer pour solidariser la partie ondulée 20 avec la caisse 16.

La plaque de maintien 22 est fixée sur l'enveloppe 18 du bas de caisse 12 grâce à des moyens de fixation classiques tels que des clips.

Dans le second mode de réalisation de la figure 3, on rajoute une plaque de maintien 36 intermédiaire entre les deux plaques de maintien 22 et 24. Cette plaque de maintien 36 est destinée à renforcer le bas de caisse 12. Cette plaque de maintien 36 est réalisée dans le même matériau que les plaques de maintien 22 et 24.

Grâce à l'invention, en cas de choc latéral mineur, la bande ondulée se déforme de façon élastique grâce à ses ondulations. Par ailleurs, en cas de choc latéral violent, le bas de caisse 12 peut être embouti, sans pour autant bloquer l'ouverture des portières 14 du véhicule 10.

Parmi les avantages de l'invention, on notera que, en plus de soutenir la plage supérieure 28 du bas de baisse 12 et d'absorber latéralement les chocs grâce aux ondulations 21 et 23, la présence de la bande ondulée 20 et de ses moyens de fixation 32 sur la caisse 16 assure une fixation solide et étendue du bas de caisse 12 sur la caisse 16.

On notera enfin que l'invention n'est pas limitée aux modes de réalisation précédemment décrits.

## Revendications

1. Bas de caisse pour véhicule automobile destiné à être fixé à la caisse du véhicule de façon à dépasser, selon la direction transversale du véhicule, d'une partie inférieure d'une face externe d'une portière du véhicule en position fermée, le bas de caisse comportant des moyens de renfort (20, 22, 24, 36) agencés à l'intérieur de ce bas de caisse (12), ou les moyens de renfort comportent une bande (20) en matière plastique ondulée verticale.

2. Bas de caisse pour véhicule automobile selon la revendication 1 dans lequel les moyens de renfort comportent au moins une plaque de maintien (22, 24, 36).

3. Bas de caisse pour véhicule automobile selon la revendication précédente dans lequel la plaque de maintien (22, 24, 36) est en matière plastique.

4. Bas de caisse pour véhicule automobile selon l'une quelconque des revendications précédentes, dans lequel la bande ondulée (20) en matière plastique est venue de matière avec la plaque de maintien (22, 24, 36).

5. Bas de caisse pour véhicule automobile selon l'une quelconque des revendications précédentes, comportant des moyens de fixation (32) des moyens de renfort (20) à la caisse (16).

6. Bas de caisse pour véhicule automobile selon l'une quelconque des revendications précédentes, comportant des moyens de fixation (34) des moyens de renfort (22) au bas de caisse (18).

7. Bas de caisse pour véhicule automobile selon la revendication précédente, dans lequel les moyens de fixation (32) des moyens de renfort (20) à la caisse sont agencés sur les creux (21) de la partie ondulée (20).

8. Bas de caisse pour véhicule automobile selon la revendication 5 ou 7, dans lequel les moyens de fixation (32) comprennent des moyens de vissage, des moyens de clippage, des moyens de soudage ou des moyens de collage.

9. Véhicule automobile comprenant un bas de caisse selon l'une quelconque des revendications précédentes.

## Claims

1. A motor vehicle sill moulding designed to be fixed to the body frame of the vehicle so as to project, in the transverse direction of the vehicle, from a lower part of an outer face of a door of the vehicle in closed position, the sill moulding including reinforcing means (20, 22, 24, 36) arranged inside the sill moulding (22), wherein the reinforcing means include a vertical undulating strips (20) of plastics material.

2. A motor vehicle sill moulding according to claim 1, wherein the reinforcing means comprise at least one holding plate (22, 24, 36).

3. A motor vehicle sill moulding according to the preceding claim, wherein the holding plate (22, 24, 36) is made of plastics material.

4. A motor vehicle sill moulding according to any of the preceding claims, wherein the undulating strip (20) of plastics material is made integrally with the holding plate (22, 24, 36).

5. A motor vehicle sill moulding according to any of preceding claims, including fastener means (32) for fastening the reinforcing means (20) to the body frame (16).

6. A motor vehicle sill moulding according to any of the preceding claims, including fastener means (34) for fastening the reinforcing means (22) to the sill moulding (18).

7. A motor vehicle sill moulding according to the preceding claim, wherein the fastener means (32) for fastening the reinforcing means (20) to the body frame are arranged on the recesses (21) of the undulating portion (20).

8. A motor vehicle sill moulding according to claim 5 or claim 7, wherein the fastener means (32) include screw-fastening means, catching means, welding means, or adhesive means.

9. A motor vehicle comprising a sill moulding according to any of the preceding claims.

## Patentansprüche

1. Karosserieunterteil für Kraftfahrzeug, der dazu bestimmt ist, an der Karosserie des Fahrzeugs derart befestigt zu werden, dass er in Querrichtung des Fahrzeugs an einem unteren Teils einer Außenseite einer Tür des Fahrzeugs in geschlossener Position vorsteht, wobei der Karosserieunterteil Verstärkungsmittel (20, 22, 24, 36) aufweist, die in dem Inneren dieses Karosserieunterteils (12) eingerichtet sind, wobei die Verstärkungsmittel ein Band (20) aus vertikal welligem Kunststoff aufweisen.

2. Karosserieunterteil für Kraftfahrzeug nach Anspruch 1, bei dem die Verstärkungsmittel mindestens eine Halteplatte (22, 24, 36) aufweisen.

3. Karosserieunterteil für Kraftfahrzeug nach dem vorhergehenden Anspruch, bei dem die Halteplatte (22, 24, 36) aus Kunststoff besteht.

4. Karosserieunterteil für Kraftfahrzeug nach einem der vorhergehenden Ansprüche, bei dem das wellige Band (20) aus Kunststoff aus einem Stück mit der Halteplatte (22, 24, 36) hergestellt ist.

5. Karosserieunterteil für Kraftfahrzeug nach einem der vorhergehenden Ansprüche, der Mittel (32) zum Befestigen der Verstärkungsmittel (20) an der Karosserie (16) aufweist.

6. Karosserieunterteil für Kraftfahrzeug nach einem der vorhergehenden Ansprüche, der Mittel (34) zum Befestigen der Verstärkungsmittel (22) an dem Karosserieunterteil (18) aufweist.

7. Karosserieunterteil für Kraftfahrzeug nach dem vorhergehenden Anspruch, bei dem die Mittel (32) zum Befestigen der Verstärkungsmittel (20) an der Karosserie auf den Vertiefungen (21) des welligen Teils (20) eingerichtet sind.

8. Karosserieunterteil für Kraftfahrzeug nach Anspruch 5 oder 7, bei dem die Befestigungsmittel (32) Schraubmittel, Clipsmittel, Schweißmittel oder Klebemittel aufweisen.

9. Kraftfahrzeug, das einen Karosserieunterteil nach einem der vorhergehenden Ansprüche aufweist.
